# EUROPEAN PATENT SPECIFICATION

(11) **EP 3 596 024 B1**
(45) Date of publication and mention of the grant of the patent: **25.11.2026**
(21) Application number: 18709048.5
(22) Date of filing: 13.03.2018
(51) Int. Cl.: C04B 26/06, C04B 111/70

(54) **GROUT COMPOSITIONS FOR EXTERIOR TILES**
MÖRTELZUSAMMENSETZUNGEN FÜR AUSSENFLIESEN
COMPOSITIONS DE COULIS POUR CARREAUX EXTÉRIEURS

(30) Priority: 14.03.2017 EP 17305275
(43) Date of publication of application: 22.01.2020
(73) Proprietor: Etex Building Performance International SAS, 84915 Avignon (FR)
(72) Inventor: CAGNOT, Michel, 03100 Montluçon (FR)
(74) Representative: Etex Services NV - Etex IPSC
(86) International application number: PCT/EP2018/056270
(87) International publication number: WO 2018/167080

(56) References cited:
- EP-A2- 1 666 430
- DE-A1- 102006 060 106
- DE-A1- 3 712 382
- US-A- 3 854 267
- US-A1- 2005 124 735
- US-A1- 2005 197 444
- US-A1- 2014 083 038

## Description

### FIELD OF THE INVENTION

The present invention relates to a grout composition for jointing exterior boards such as cladding panels.

### BACKGROUND OF THE INVENTION

In the installation of tiles or boards such as cladding panels, it is necessary to fill the interstices between adjacent tiles or boards with a composition, generally named a grout composition or jointing compound.

Exterior boards may be submitted to severe climatic changes, for example due to the different seasons and the joints should be resistant to those climatic changes. More particularly, the joint should be able to absorb the deformations and/or the displacements of the boards. Therefore, the grout composition, after drying, should provide a joint having satisfying properties, such as a high elasticity.

Typical jointing compounds for use with exterior boards are pastes containing an organic binder, limestone, and water. Water may be present in the product as sold, or be added on site. The paste is applied to the joints and then allowed to dry. A typical problem with such jointing composition is the high shrinkage upon drying.

US 3,854,267 discloses a grout composition for cement boards comprising a polymer emulsion providing a cross-linkable polymer and one or more water insoluble fillers including spherical glass. Said document does not disclose the grout composition of the present invention.

DE 37 12 382 A1 described joint compositions for jointing plasterboard which preferably comprises about 20wt% of a re-emulsifiable polymer, 15 wt.% of glass beads and 60 wt.% of limestone filler.

US 2005/197444 A1 describes a grout composition comprising about 19 wt.% polymer, 44 wt.% filler, and 1.8 wt.% glass beads.

US 2005/124735 A1 describes grout compositions for tile installation projects having a good strength and resistance to shrinkage. These compositions are however dedicated to ceramic tiles.

There is a need to provide a grout composition having satisfying properties and which provide after drying a satisfying bonding and/or jointing of the boards.

### SUMMARY OF THE INVENTION

A first object of the present invention is a grout composition comprising:
- from 25 to 40% by weight of a polymer emulsion comprising polymer and a liquid such as water, providing from 16 to 25% by weight of polymer,
- a filler made of particles having a volume-basis median particle size (d50) as measured with laser diffraction as described in ISO 13320:2009 ranging from 5 µm to 250 µm in an amount ranging from 45 to 60% by weight,
- glass beads in an amount ranging from 10 to 15% by weight;
based on the total weight of the grout composition.

According to an embodiment of the invention, the polymer is not crosslinked.

According to an embodiment of the invention, the polymer has a glass transition temperature of less than or equal to -10°C.

According to an embodiment of the invention, the polymer comprises at least one monomer selected from (meth)acrylate and alkyl(meth)acrylate monomers.

According to an embodiment of the invention, the polymer emulsion has a solid content ranging from 50 to 75% by weight, preferably from 60 to 70%, based on the total weight of the polymer emulsion.

According to an embodiment of the invention, the polymer emulsion provides from 17 to 22% by weight of polymer, preferably from 18 to 20% by weight of polymer.

According to an embodiment of the invention, the grout composition comprises:
- from 25 to 40% by weight of the polymer emulsion providing from 16 to 25% by weight of polymer,
- from 45 to 60% by weight of the filler made of particles having a volume-basis median particle size (d50) as measured with laser diffraction as described in ISO 13320:2009 ranging from 5 µm to 250 µm,
- from 10 to 15% by weight of glass beads,
- from 1 to 20% by weight of one or more additives selected from antioxidants, dispersing agent, biocides, water retainer, pigments, and plasticizers;
based on the total weight of the grout composition.

According to an embodiment of the invention, the filler is selected from mineral fillers. Preferably, the mineral fillers are selected from carbonates, sand, silica, silicates, mica and alumina, preferably from carbonates.

According to an embodiment of the invention, the glass beads have a mean particle size ranging from 1 to 50 µm.

According to an embodiment of the invention, water represents from 5 to 25% by weight, preferably from 10 to 20% by weight, based on the total weight of the grout composition.

Another objet of the invention is the use of the grout composition according to the invention for jointing boards.

According to an embodiment of the invention, the boards are fiber cement boards.

Finally, another object of the invention is a wall cladding comprising boards, characterized in that at least one joint between two adjacent boards is made with the grout composition according to the invention.

The grout composition of the invention provides a low shrinkage phenomenon and the joint obtained after drying the grout composition shows a high elasticity. The grout composition of the invention was found to be particularly suitable for jointing fiber cement panels.

The grout composition typically is a ready to use composition which does not need to be mixed with water or other components prior to use.

Further features and advantages of the invention will appear from the following description of embodiments of the invention, given as non-limiting examples.

### DETAILED DESCRIPTION OF THE INVENTION

A first object of the present invention is a grout composition comprising:
- from 25 to 40% by weight of a polymer emulsion comprising a polymer and a liquid, providing from 16 to 25% by weight of polymer,
- a filler made of particles having a volume-basis median particle size (d50) as measured with laser diffraction as described in ISO 13320:2009 ranging from 5 µm to 250 µm in an amount ranging from 45 to 60% by weight,
- glass beads in an amount ranging from 10 to 15% by weight
based on the total weight of the grout composition.

The grout composition comprises a polymer emulsion. As will be clear to the person skilled in the art, the term "polymer emulsion" mentioned herein refers to (solid) polymer particles dispersed in a liquid such as water. The polymer is typically obtained by emulsion polymerization.
Preferably, the liquid is or comprises water. In preferred embodiments, the polymer emulsion is an aqueous polymer emulsion. The polymer emulsion may also contain liquids other than water. In preferred embodiments, the liquid phase in the polymer emulsion contains at least 90% by weight water, preferably at least 95% by weight, more preferably at least 99% by weight.

The polymer emulsion may contain a single type of polymer, or a mixture of two or more polymers. In particular embodiments, a hybrid polymer emulsion may be used which is produced by chemically combining different types of polymer emulsions.

The polymer of the emulsion is preferably not crosslinked. Preferably, the grout composition also does not contain a dedicated cross-linking agent.

The polymer of the emulsion can be a homopolymer or a copolymer. Preferably, the polymer comprises (is obtained from) at least one monomer selected from (meth)acrylate and alkyl(meth)acrylate monomers, the alkyl group can be selected from linear or branched alkyl groups comprising from 1 to 10 carbon atoms, such as methyl, ethyl, propyl, butyl.

According to an embodiment, all the polymers of the grout composition are selected from (meth)acrylate (co)polymers. By "(meth)acrylate (co)polymer", it is to be understood a homopolymer or a copolymer comprising (obtained from) at least one monomer selected from (meth)acrylate and alkyl(meth)acrylate monomers. A preferred co-monomer for copolymers is styrene. In particular embodiments, the polymer emulsion comprises one or more polymers selected from an acrylic polymer and a styrene-acrylic polymer.

Preferably, the polymer emulsion has a glass transition temperature of less than or equal to -10°C, preferably less than or equal to -15°C, more preferably less than or equal to -20°C, even more preferably less than or equal to -25°C. Such polymer emulsions may provide an increased weather resistance to the joint. In a conventional way, well known to one skilled in the art, the glass transition temperature may be measured by DSC (Differential Scanning calorimetry). More particularly the glass transition temperature can be measured by DSC according to the standard ISO 11357-2:2013, using the half-step-height method.

The grout composition comprises from 16 to 25% by weight of polymer, said polymer being provided by the polymer emulsion. Preferably, the composition comprises from 17 to 22% by weight of polymer, more preferably from 18 to 20% by weight of polymer, based on the total weight of the grout composition.

The polymer emulsion may have a solid content ranging from 50 to 75% by weight, preferably from 60 to 70% by weight, based on the total weight of the polymer emulsion.

The polymer emulsion may represent from 25 to 40% by weight of the total weight of the grout composition.

Water is generally present in the grout composition in an amount ranging from 5% to 25% by weight, preferably from 10% to 20% by weight, based on the total weight of the grout composition. Typically, water present in the polymer emulsion provides most or all of the water in the grout composition.

Although water generally is the main solvent present in the grout composition, it is not excluded that one or more co-solvents may be present, for example texanol.

The grout composition comprises a filler, said filler being preferably different from glass beads. Preferably, the filler is selected from mineral fillers, such as carbonates, sand, silica, silicates, mica and alumina. According to an embodiment, the filler is selected from carbonates, such as calcium carbonate.

The filler represents from 45 to 60% by weight, of the weight of the grout composition.

As known by the skilled person, the filler is typically provided as a powder. The filler is provided as particles having a volume-basis median particle size (d50) ranging from 5 µm to 250 µm, preferably ranging from 10 µm to 100 µm, more preferably ranging from 10 µm to 50 µm. In specific embodiments, the particles have a d50 ranging from 10 µm to 30 µm. The particle size is an equivalent spherical diameter as measured with laser diffraction, such as described in ISO 13320:2009. In such method, the particles are dispersed in air (dry form) and a laser is passed through the dispersed particles. The intensity of the scattered light at different angles is collected. Preferably, the span of the particle size distribution is between 1 and 3.

The grout composition also comprises glass beads. Preferably, glass beads have a mean (volume mean) particle size ranging from 1 to 50 µm. The particle size is an equivalent spherical diameter as measured with laser diffraction, such as described above for the filler. Glass beads can be hollow glass beads or solid glass beads, and preferably, glass beads are solid glass beads.

The glass beads represent from 10 to 15% by weight, of the total weight of the grout composition.

The grout composition may comprise one or more other additives, i.e. additives different from the polymer emulsion, filler, and glass beads defined above.

The other additives may represent up to 20% by weight, preferably from 1 to 10% by weight, of the total weight of the grout composition.

The other additives may be selected from antioxidants, dispersing agent, biocides, water retainer, pigments, plasticizers, and co-solvents.

Among dispersing agent, mention may be made of polyacrylate ammonium salts.

Among water retainers, mention may be made of modified celluloses such as methyl hydroxypropyl cellulose.

According to an embodiment of the invention, the grout composition comprises:
- from 25 to 40% by weight of the polymer emulsion providing from 16 to 25% by weight of polymer,
- from 45 to 60% by weight of the filler made of particles having a volume-basis median particle size (d50) as measured with laser diffraction as described in ISO 13320:2009 ranging from 5 µm to 250 µm,
- from 10 to 15% by weight of glass beads,
- from 1 to 20% by weight, preferably from 1 to 10% by weight of an additive selected from antioxidants, dispersing agent, biocides, water retainer, pigments, and plasticizers;
based on the total weight of the grout composition.

According to an embodiment of the invention, the grout composition comprises:
- the polymer emulsion comprising polymer and a liquid such as water, providing from 17 to 22% by weight of polymer, and preferably providing from 18 to 20% by weight of polymer;
- the filler made of particles having a volume-basis median particle size (d50) as measured with laser diffraction as described in ISO 13320:2009 ranging from 5 µm to 250 µm in an amount ranging from 45 to 60% by weight,
- glass beads in an amount ranging from 10 to 15% by weight;
based on the total weight of the grout composition.

According to a specific embodiment of the invention, the grout composition comprises:
- from 25 to 40% by weight of a polymer emulsion comprising water and a polymer, providing from 17 to 22% by weight of polymer, and preferably providing 18 to 20% by weight of polymer;
- the filler made of particles having a volume-basis median particle size (d50) as measured with laser diffraction as described in ISO 13320:2009 ranging from 5 µm to 250 µm in an amount ranging from 45 to 60% by weight;
- from 10 to 15% by weight of glass beads;
- from 1 to 10% by weight of one or more additives selected from antioxidants, dispersing agent, biocides, water retainer, pigments, and plasticizers;
based on the total weight of the grout composition.

The grout composition of the invention may be prepared by mixing the polymer emulsion, the filler, the glass beads and optionally the other additives. The mixing of the components of the composition is preferably performed at a temperature ranging from 5°C to 40°C, preferably at ambient temperature (i.e. about 25°C).

Another object of the present invention is the use of the grout composition as defined above for jointing boards, and in particular exterior boards such as cladding panels.

The boards preferably are boards based on a hydraulic binder, more preferably fiber cement boards. Indeed, the present inventors have found that the grout compositions described herein are particularly useful for jointing fiber cement boards.

The grout composition may be applied in the interstices between adjacent boards, said interstices typically have a width ranging from 1 mm to 10 mm, more particularly a width ranging from 1 mm to 5 mm.

The grout composition may be applied by any known processes, such as with a spatula.

Before applying the grout composition, the boards may be fixed onto a support by any conventional fixation means, such as screws, nails, and/or an adhesive. Typically, the boards are screwed onto the support.

The joint obtained upon drying of the grout composition exhibits a low shrinkage and a high elasticity. The high elasticity of the joint allows to absorb the deformations and/or the displacements of the boards that may occurs, in particular with climatic changes. The grout composition of the present invention is thus very useful for jointing exterior boards, such as exterior fiber cement boards.

By "exterior boards" or "exterior cement boards", it is to be understood, boards or cement boards which aimed to be applied for example onto the outside walls of a building.

The invention also describes a method for jointing boards, the method comprising applying a grout composition according to the present invention in an interstice formed by two adjacent boards. Said method may further comprise the drying of the grout composition.

Another object of the present invention is a surface coating or wall cladding comprising boards, characterized in that at least one joint between two adjacent boards is made with the grout composition according to the present invention.

### EXAMPLES

A grout composition according to the invention was prepared, comprising 30% polymer emulsion, 53.6% calcium carbonate, and 13.4% glass beads (amounts in weight% relative to the total composition weight) as main components. The polymer emulsion is an acrylic polymer emulsion containing about 62% by weight of polymer having a glass transition temperature of -35°C. As minor components, the composition contains a small amount of additives, including antifoaming agent, co-solvent, sodium hydroxide, dispersing agent, water retainer, thickener, and biocide.

The composition was compared to a commercially available jointing composition (Tex-Joint juntas, available from Corona, Colombia). In particular, the elasticity and shrinkage was assessed. The elasticity was tested by a traction test, wherein a gap of 4 mm between two board samples (256 by 100 mm) was filled with the joint composition. The joints were subjected to accelerated ageing. Then, the boards were pulled apart with a capacity of 500 daN, and the elongation before cracking of the joint was determined. The shrinkage was tested by filling a ring of 6.5 cm diameter and 0.25 cm height with the joint composition. After drying, the final volume of the joint composition was compared to the ring volume. The results are provided in Table 1, and show an improved (i.e. lower) shrinkage and higher elasticity (i.e. higher elongation before cracking) compared to the commercially available product.

**Table 1 - Elasticity and shrinkage of two grout compositions**

| | **Grout composition (according to the invention** | **Tex Joint (commercial product)** |
|---|---|---|
| **Shrinkage (%)** | 24 | 44 |
| **Elongation (mm)** | 1.33 | 0.88 |

## Claims

1. A grout composition comprising:
- from 25 to 40% by weight of a polymer emulsion comprising water and a liquid, providing from 16 to 25% by weight of polymer,
- a filler made of particles having a volume-basis median particle size (d50) as measured with laser diffraction as described in ISO 13320:2009 ranging from 5 µm to 250 µm in an amount ranging from 45 to 60% by weight,
- glass beads in an amount ranging from 10 to 15% by weight,
based on the total weight of the grout composition.

2. The grout composition according to claim 1, wherein the polymer is not crosslinked.

3. The grout composition according to claim 1 or 2, wherein the polymer has a glass transition temperature measured by DSC according to the standard ISO 1 1357- 2:2013, using the half-step-height method of less than or equal to -10°C.

4. The grout composition according to any one of claims 1 to 3, wherein the polymer comprises at least one monomer selected from (meth)acrylate and alkyl(meth)acrylate monomers.

5. The grout composition according to any one of claims 1 to 4, wherein the polymer emulsion has a solid content ranging from 50 to 75% by weight, preferably from 60 to 70%, based on the total weight of the polymer emulsion.

6. The grout composition according to any one of claims 1 to 5, wherein the polymer emulsion provides from 17 to 22% by weight of polymer, preferably from 18 to 20% by weight of polymer.

7. The grout composition according to any one of claims 1 to 6, wherein the filler is selected from mineral fillers.

8. The grout composition according to claim 7, wherein the mineral fillers are selected from carbonates, sand, silica, silicates, mica and alumina, preferably from carbonates.

9. The grout composition according to any one of claims 1 to 8, wherein the glass beads have a mean particle size ranging from 1 to 50 µm.

10. The grout composition according to any one of claims 1 to 9, wherein water represents from 5 to 25% by weight, preferably from 10 to 20% by weight, based on the total weight of the grout composition.

11. Use of the grout composition according to any one of claims 1 to 10 for jointing boards.

12. Use according to claim 11, wherein the boards are fiber cement boards, preferably fiber cement boards having tapered edges.

13. A wall cladding comprising boards, **characterized in that** at least one joint between two adjacent boards is made with the grout composition according to any one of claims 1 to 10.

## Patentansprüche

1. Fugenmörtelzusammensetzung, umfassend:
• 25 bis 40 Gew.-% einer Polymeremulsion, die Wasser und eine Flüssigkeit umfasst und 16 bis 25 Gew.-% Polymer bereitstellt;
• einen Füllstoff aus Partikeln mit einer volumenbezogenen mittleren Partikelgröße *(d50),* gemessen mittels Laserbeugung wie in ISO 13320:2009 beschrieben, im Bereich von 5 µm bis 250 µm, in einer Menge von 45 bis 60 Gew.-%;
• Glasperlen in einer Menge von 10 bis 15 Gew.-%;
bezogen auf das Gesamtgewicht der Fugenmörtelzusammensetzung.

2. Fugenmörtelzusammensetzung nach Anspruch 1, wobei das Polymer nicht vernetzt ist.

3. Fugenmörtelzusammensetzung nach Anspruch 1 oder 2, wobei das Polymer eine Glasübergangstemperatur aufweist, die mittels DSC gemäß der Norm ISO 11357-2:2013 unter Verwendung der Halbstufenhöhenmethode gemessen wird und kleiner oder gleich -10 °C ist.

4. Fugenmörtelzusammensetzung nach einem der Ansprüche 1 bis 3, wobei das Polymer mindestens ein Monomer umfasst, ausgewählt aus (Meth)acrylat- und Alkyl(meth)acrylatMonomeren.

5. Fugenmörtelzusammensetzung nach einem der Ansprüche 1 bis 4, wobei die Polymeremulsion einen Feststoffgehalt im Bereich von 50 bis 75 Gew.-%, vorzugsweise von 60 bis 70 Gew.-%, bezogen auf das Gesamtgewicht der Polymeremulsion, aufweist.

6. Fugenmörtelzusammensetzung nach einem der Ansprüche 1 bis 5, wobei die Polymeremulsion 17 bis 22 Gew.-% Polymer, vorzugsweise 18 bis 20 Gew.-% Polymer, bereitstellt.

7. Fugenmörtelzusammensetzung nach einem der Ansprüche 1 bis 6, wobei der Füllstoff aus mineralischen Füllstoffen ausgewählt ist.

8. Fugenmörtelzusammensetzung nach Anspruch 7, wobei die mineralischen Füllstoffe aus Carbonaten, Sand, Siliciumdioxid, Silikaten, Glimmer und Aluminiumoxid, vorzugsweise aus Carbonaten, ausgewählt sind.

9. Fugenmörtelzusammensetzung nach einem der Ansprüche 1 bis 8, wobei die Glasperlen eine mittlere Partikelgröße im Bereich von 1 bis 50 µm aufweisen.

10. Fugenmörtelzusammensetzung nach einem der Ansprüche 1 bis 9, wobei Wasser 5 bis 25 Gew.-%, vorzugsweise 10 bis 20 Gew.-%, bezogen auf das Gesamtgewicht der Fugenmörtelzusammensetzung, ausmacht.

11. Verwendung der Fugenmörtelzusammensetzung nach einem der Ansprüche 1 bis 10 zum Verfugen von Platten.

12. Verwendung nach Anspruch 11, wobei die Platten Faserzementplatten, vorzugsweise Faserzementplatten mit verjüngten Kanten, sind.

13. Wandbekleidung, umfassend Platten, **dadurch gekennzeichnet, dass** mindestens eine Fuge zwischen zwei benachbarten Platten mit der Fugenmörtelzusammensetzung nach einem der Ansprüche 1 bis 10 hergestellt ist.

## Revendications

1. Composition de jointoiement comprenant :
• de 25 à 40 % en poids d'une émulsion polymérique comprenant de l'eau et un liquide, la dite émulsion apportant de 16 à 25 % en poids de polymère ;
• une charge constituée de particules présentant une taille médiane volumique *(d50),* mesurée par diffraction laser comme décrit dans la norme ISO 13320:2009, comprise entre 5 µm et 250 µm, en une quantité comprise entre 45 et 60 % en poids,
• des billes de verre en une quantité comprise entre 10 et 15 % en poids ;
les pourcentages étant rapportés au poids total de la composition de jointoiement.

2. Composition de jointoiement selon la revendication 1, dans laquelle le polymère n'est pas réticulé.

3. Composition de jointoiement selon la revendication 1 ou 2, dans laquelle le polymère présente une température de transition vitreuse, mesurée par DSC conformément à la norme ISO 11357-2:2013, selon la méthode de la demi-hauteur, inférieure ou égale à -10 °C.

4. Composition de jointoiement selon l'une quelconque des revendications 1 à 3, dans laquelle le polymère comprend au moins un monomère choisi parmi les monomères (méth)acrylates et alkyl(méth)acrylates.

5. Composition de jointoiement selon l'une quelconque des revendications 1 à 4, dans laquelle l'émulsion polymérique présente une teneur en matières solides comprise entre 50 et 75 % en poids, de préférence entre 60 et 70 %, rapportée au poids total de l'émulsion polymérique.

6. Composition de jointoiement selon l'une quelconque des revendications 1 à 5, dans laquelle l'émulsion polymérique apporte de 17 à 22 % en poids de polymère, de préférence de 18 à 20 % en poids de polymère.

7. Composition de jointoiement selon l'une quelconque des revendications 1 à 6, dans laquelle la charge est choisie parmi des charges minérales.

8. Composition de jointoiement selon la revendication 7, dans laquelle les charges minérales sont choisies parmi les carbonates, le sable, la silice, les silicates, le mica et l'alumine, de préférence parmi les carbonates.

9. Composition de jointoiement selon l'une quelconque des revendications 1 à 8, dans laquelle les billes de verre présentent une taille moyenne des particules comprise entre 1 et 50 µ^{m}.

10. Composition de jointoiement selon l'une quelconque des revendications 1 à 9, dans laquelle l'eau représente de 5 à 25 % en poids, de préférence de 10 à 20 % en poids, rapportée au poids total de la composition de jointoiement.

11. Utilisation de la composition de jointoiement selon l'une quelconque des revendications 1 à 10 pour le jointoiement de panneaux.

12. Utilisation selon la revendication 11, dans laquelle les panneaux sont des panneaux en fibrociment, de préférence des panneaux en fibrociment présentant des bords amincis.

13. Revêtement mural comprenant des panneaux, **caractérisé en ce qu'**au moins un joint entre deux panneaux adjacents est réalisé au moyen de la composition de jointoiement selon l'une quelconque des revendications 1 à 10.
